# EUROPEAN PATENT SPECIFICATION

(11) **EP 3 693 620 B1**
(45) Date of publication and mention of the grant of the patent: **11.09.2024**
(21) Application number: 20155880.6
(22) Date of filing: 06.02.2020
(51) Int. Cl.: F16B 21/08, F16B 5/06

(54) **FASTENER MADE OF TWO DIFFERENT MATERIALS AND FASTENING ARRANGEMENT**
AUS ZWEI VERSCHIEDENEN MATERIALIEN GEFERTIGTES BEFESTIGUNGSELEMENT UND BEFESTIGUNGSANORDNUNG
DISPOSITIF DE FIXATION CONSTITUÉ DE DEUX MATÉRIAUX DIFFÉRENTS ET AGENCEMENT DE FIXATION

(30) Priority: 07.02.2019 EP 19156043
(43) Date of publication of application: 12.08.2020
(73) Proprietor: Newfrey LLC, New Britain, CT 06053 (US)
(72) Inventor: Kempf, Christian, 35394 Gießen (DE); Rosemann, Frank, 35394 Gießen (DE)
(74) Representative: SBD IPAdmin

(56) References cited:
- WO-A1-2011/043352
- DE-A1- 102016 203 141
- JP-U- H0 545 215
- US-A1- 2012 261 942

## Description

The present disclosure relates to fasteners made of two different materials, in particular for fixing a frame to a panel such as a vehicle body. The present disclosure further relates to fastening arrangements comprising a support and a fastener made of two different materials. The fastener comprises a body element and a support element partly overmolded on the body element.

Fasteners can be used to retain two components together. Such fasteners and fastening arrangements are for example used in automotive industry for fastening trim parts and attached parts to the vehicle body or to body parts such as doors and the like. For example, fastener clips can be used to retain an automotive door or trim panel to an automotive doorframe or support surface. The fastener clips can engage with a hollow portion, commonly called "dog house" assembly in or on the door panel and can be inserted through an opening in the doorframe to retain the panel on the doorframe. Fastening there should be accomplished in the simplest possible manner and without the use of tools (or only few).

Various fasteners of the specified type are known for example from EP1395420, DE102016203141 or WO2016003578. The prior art fasteners have in common that an element in the shape of a stud is provided as the connecting part and is joined to the support part in a latching manner by insertion through an opening in the support part.

In DE102016203141, the fastener is a two-part fastener comprising a first part with a stem and a flange and an extension sleeve made in a first material with a second material partly overmolded. The second material forms a sealing element or sealing sleeve which continuously extends from a flange to a portion of the shank of the sleeve. The use of this fasteners may be burdensome with the two elements. Besides, the manufacture is complicated. JPH0545215U, US20120261942 and WO2011043352 also disclose fasteners made of two different materials.

The object of the present invention is to go some way towards solving or at least mitigating the problem above and providing a fastener allowing easy manufacture and manipulation with dismounting possibilities and adjustable mounting and dismounting forces. The object of the present invention is further to provide a fastener avoiding or lowering the risks of paint scratches or paint abrasion.

To this aim, according to the invention, it is provided a fastener for attaching a panel to a frame according to claim 1.

The mounting and dismounting forces of such fasteners can be adjusted through the second plastic material. Indeed, the position of the second plastic material, notably overmolded on the engaging member allows to adjust the mounting and dismounting forces by adjusting the thickness of the material. Besides, the position of the second plastic material extending at the perimeter of the flange and over the engaging member allows to protect all the parts of the body element which are possibly in contact with the panel or the frame to be covered by a softer material and thus lowering the risks of paint scratching or abrasion.

In some embodiments, the free end of the stem comprises a first segment having a first conical shape and a second segment having a second conical shape, wherein the second segment extends between the first segment and the flange, and wherein the support element is overmolded on the second segment, the base of the first conical shape of the first segment forming an abutment for the support element overmolded on the second segment. The two cones shape at the free end of the stem is particularly convenient to form an abutment portion and a recess portion for the second plastic material. The distal end of the stem stays uncovered, allowing easy manufacture of the fasteners.

According to the invention, each engaging member comprises a free end directed toward the internal surface of the flange, and wherein a protrusion is arranged on the free end, so that the protrusion forms an abutment for the support element on the engaging member. The protrusion clearly delimits the support element.

In some embodiments, the support element overmolded on the engaging member further comprises flaps extending sensibly parallel to the flange from the protrusion. The flap entirely made in the second plastic material (soft material) thus reduces the risks of scratch. During dismounting, the flap is retracted so that several mounting and dismounting steps are possible.

In some embodiments, two engaging members are provided, and wherein the stem has a rectangular cross section. Such design is easy to manufacture. Besides, the rectangular cross section of the stem allows a better positioning of the engaging members.

In some embodiments, the grip portion comprises a first segment extending from the external surface of the flange with a restricted cross section, and a second segment extending from the first segment having an arc-shaped body.

In an alternative embodiment, the grip portion comprises a first segment extending from the external surface of the flange with a restricted cross section, and a second segment extending from the first segment parallel to the flange.

In some embodiments, the rim is a stepped rim. The stepped rim is easy to manufacture and can be overmolded such that the support element extending at the peripheral of the flange can partly freely extend and form a non-zero angle with the flange.

In some embodiments, the support element is overmolded on a portion of the stem. More particularly, the support element is overmolded on an external portion of the rim.

According to another embodiment of the invention there is provided a fastening arrangement with a fastener as described above, a frame comprising a slot and a panel, wherein the panel comprises a hole, the frame comprises a slot.

Other characteristics and advantages of the invention will readily appear from the following description of embodiments, provided as non-limitative examples, in reference to the accompanying drawings.

In the drawings:
Fig. 1 shows a fastener according to the invention with a body element and a support element;
Fig. 2 shows a perspective view of the fastener of Fig. 1;
Fig. 3 shows a cross-section of a fastener according to Fig. 1 arranged within a frame or rail;
Fig. 4 shows a cross-section of a fastening arrangement with a fastener according to a second embodiment, not forming part of the invention, a frame and a panel;
Fig. 5 shows a fastener according to a third embodiment of the invention, wherein the support element also comprises a flap;
Fig. 6 shows a fastener according to a fourth embodiment of the invention, wherein the grip portion extends parallel to the flange.

On the different figures, the same reference signs designate identical or similar elements.

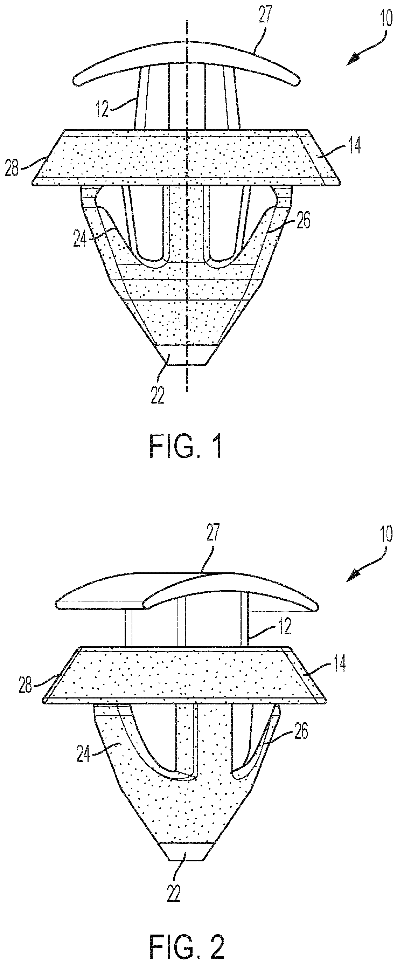

Fig. 1, Fig. 2 and Fig. 3 show a fastener 10 according to a first embodiment of the present invention. The fastener 10 comprises a body element 12 made in a first plastic material and a support element 14 made in a second plastic material. The second plastic material is softer (or less rigid) than the first plastic material. It is to be understood that the first plastic material is more rigid than the second plastic material. In other words, the second plastic material has an elasticity which is superior to the first plastic material's elasticity, avoiding thus to scratch painting for instance. The second plastic material is more compressible than the first plastic material. The first material is for example a PA66, PA6 or POM, wherein the second plastic material can be a TPE material.

The body element 12 comprises a flange 16 having an internal and an external surface opposite the internal surface, the flange 16 being flat. The flange 16 thus extends along a plane and has a rim 18. The body element 12 further comprises a stem 20 extending from the internal surface until a free end portion 22. The free end portion 22 of the stem 20 (or portion of the stem distal from the flange 16) has a conical shape. A grip portion 27 is arranged on the external surface of the flange. Engaging members 24, 26 extending from the stem 20 and expanding obliquely upwards toward the internal surface of the flange 16 are arranged on the stem 20.

The grip portion 27 comprises a first segment extending from the external surface of the flange with a restricted cross section, and a second segment extending from the first segment having an arc-shaped body.

The support element 14 is overmolded on the rim 18 of the flange 16 and extends externally forming a spring collar 28 extending at the perimeter of the flange 16. The spring collar forms a non-zero angle with the flange 16. The spring collar 28 is entirely made in the second plastic material, so that the spring collar 28 is not rigid. Actually, the spring collar 28 is retained on the flange only through overmolding on the rim 18. The rim 18 can be a stepped rim, such that an elbow is formed between the internal and the external surfaces on the lateral side of the flange 16. The elbow forms an abutment for the support element.

The support element 14 is further overmolded on the engaging members 24, 26. The support element 14 may be discontinue, such that the support element 14 overmolded on the engaging members 24, 26 does not interact with the support element 14 overmolded on the rim 18 of the flange 16.

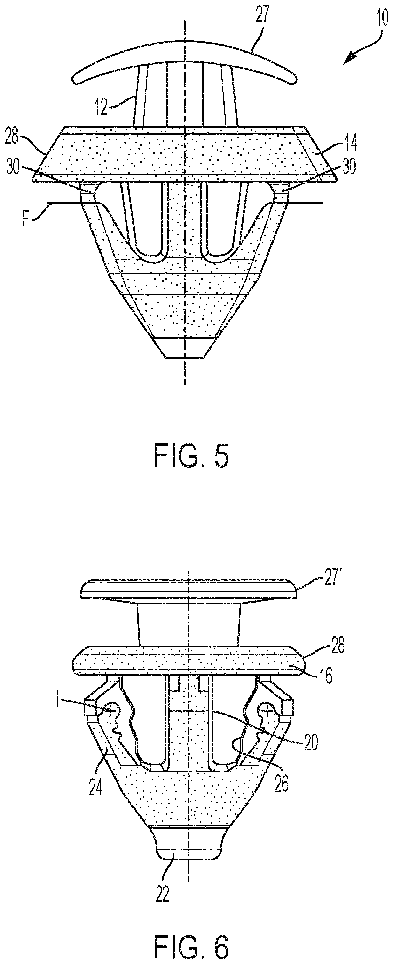

In another embodiment, the support member 14 is further overmolded on a portion of the stem. For example, as depicted Fig. 6, the support element 14 is overmolded on a surface of the stem visible from the outside (or an outer surface). A first overmolded portion extends from flange and is less wide than the stem, whereas a second overmolded extends from the first overmolded portion and covers the thickness of the stem. Thus, in the vicinity of the flange, the support element on the stem is longitudinally delimited on both side by the first plastic material.

The fastener is a one-piece element. The engaging members may have interlock portions I (as shown in Fig. 6 for instance) which allow a better adhesion of the support element 14 during the overmolding step. The interlock portions I may comprise one or several grooves or other geometrical shape allowing the adhesion. In another embodiment, the interlock portions may comprise ribs less wide than the engaging element and provided at the end of toward the end of the engaging members.

The engaging members 24, 26 extends from a portion of the stem 20 which is between the flange 16 and the free end portion 22. The engaging members 24, 26 comprise each an internal surface facing the stem and an external surface opposite the internal surface. As seen on the figures, the fastener 10 comprises two engaging members. However more engaging members might be arranged on the stem.

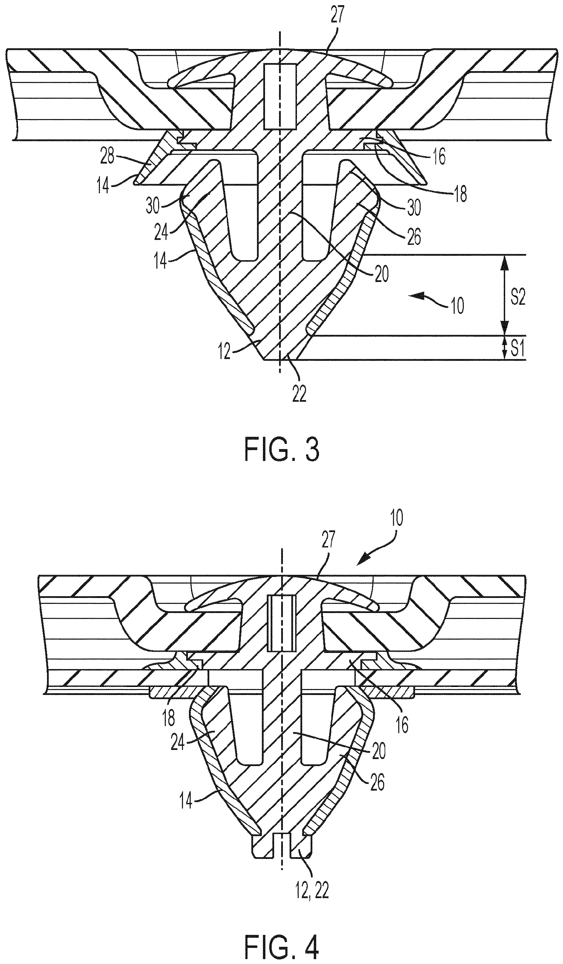

The stem 20 has for instance a rectangular cross section, and the engaging members 24, 26 are arranged on the long side of the rectangle. The engaging members 24, 26 each comprise a free end directed toward the flange 16. The free end is provided with a protrusion 30, as seen on Fig. 3. The protrusion forms an abutment for the support element 14. The interlock portions may be arranged in the vicinity of the protrusion 30.

The support element extends on the engaging members 24, 26 on their external surface and from the protrusion toward the free end of the stem, without extending on the free end of the stem. The support element 14 can be further overmolded on the short side of the stem. In other words, the support element is overmolded on the external side of the stem.

The distal end of the stem 20 comprises a first conical shape S1 and a second conical shape S2. The first conical shape S1 corresponds to the portion the most distal from the flange 16 and is not covered by the support element 14. The base of the first conical shape forms however an abutment for the support element 14 provided on the engaging member. Besides, the second conical shape forms a recess for the support element such that the support element can extend from the base of the first conical shape to the protrusion seating relatively flush with the free end portion 22 of the stem.

In a second embodiment, which is not part of the invention, depicted in Fig. 4, the support element 14 is overmolded entirely at the external surface of the engaging members. More particularly, the support element 14 covering the engaging members 24, 26 extend from the base of the first cone until the free end of the engaging members directed toward the flange 16.

In a third embodiment depicted in Fig. 5, the support element 14 covering the engaging portion extends from the base of the first cone shape to the protrusion and then further extends radially outside from the stem, such as to form flexible flaps. The flaps may extend sensibly parallel to the flange 16. The rest of the fastener is similar or identical to the first or second embodiment.

In the fourth embodiment, which is not part of the invention, depicted in Fig. 6, the grip portion 27' comprises a first segment extending from the external surface of the flange with a restricted cross section, and a second segment extending from the first segment parallel to the flange. The rest of the fastener is similar or identical to the first or second embodiment.

The engaging members 24, 26 form latches which can be retracted by introducing the fastener in an opening provided on a panel.

Fig. 3 shows a fastener according to the first embodiment in an assembled state with a frame (or rail). The frame (which is actually a rail) comprises a slot and the first segment of the grip portion with the restricted section extends in the slot, wherein the second segment of the grip portion extends on the upper side of the frame. The frame is thus sandwiched between the second segment of the grip portion and the flange.

The fastener arranged in the frame is then mounted to the panel, as seen in Fig. 4.

Fig. 4 shows a fastening arrangement. The fastening arrangement comprises a fastener, a panel and a frame. The panel is provided with a hole, in which the stem and the engaging members can be introduced. The underside of the frame faces the upper side of the panel. During the introduction of the fastener inside the hole, the engaging members 24, 26 are retracted such as to be inserted in the hole. The support element is in contact with the fastening surface, such that no paint scratching is provided. After insertion, the engaging members elastically expand such that the free end of the engaging member can abut on the underside of the panel. The flange and the spring collar extend on the upper side of the panel. The flange and the spring collar are sandwiched between the panel and the frame. Here again, due to the position of the support element, paint scratching is limited.

The fastener can be easily dismounted from the panel if needed. The needed dismounting forces are dependent from the thickness of the support element on the engaging members.

## Claims

1. Fastener (10) for attaching a panel to a frame comprising:
a) a body element (12) made in a first plastic material and
b) a support element (14) made in a second plastic material,
the second plastic material being less rigid than the first plastic material,
the support element being at least in part overmolded on the body element, wherein
the body element comprises
- a flange (16) having an internal and an external surface opposite the internal surface, the flange (16) being flat and having a rim (18),
- a stem (20) extending from the internal surface until a free end portion (22), wherein the free end portion of the stem has a conical shape,
- a grip portion (27) arranged on the external surface of the flange
- engaging members (24, 26) extending from the stem and expanding obliquely upwards toward the internal surface of the flange, the engaging members (24, 26) having an internal surface facing the stem and an external surface opposite the internal surface,
wherein the support element (14) is overmolded on the rim and extends externally forming a spring collar extending at the perimeter of the flange and forming a non-zero angle with the flange, and wherein the support element is further overmolded on the engaging members,
wherein each engaging member (24, 26) comprises a free end directed toward the internal surface of the flange (16), **characterized in that** a protrusion (30) is arranged on the free end, so that
the protrusion (30) forms an abutment for the support element on the engaging member (24, 26), and wherein the support element (14) extends on the engaging members (24, 26) on their external surface and from the protrusion toward the free end of the stem, without extending on the free end of the stem.

2. Fastener (10) according to claim 1, wherein the free end portion (22) of the stem (20) comprises a first segment (S1) having a first conical shape and a second segment (S2) having a second conical shape, wherein the second segment (S2) extends between the first segment (S1) and the flange, and wherein the support element is overmolded on the second segment (S2), a base of the conical shape of the first segment (S1) forming an abutment for the support element overmoulded on the second segment.

3. Fastener (10) according to any of the preceding claims, wherein the support element overmolded on the engaging member (24, 26) further comprises flaps (F) extending sensibly parallel to the flange (16).

4. Fastener (10) according to any of the preceding claims, wherein two engaging members (24, 26) are provided, and wherein the stem has a rectangular cross section.

5. Fastener (10) according to any of the preceding claims, wherein the grip portion (27) comprises a first segment extending from the external surface of the flange with a restricted cross section, and a second segment extending from the first segment having an arc-shaped body.

6. Fastener (10) according to any of claims 1 to 5, wherein the grip portion (27) comprises a first segment extending from the external surface of the flange with a restricted cross section, and a second segment extending from the first segment parallel to the flange (16).

7. Fastener (10) according to any of the preceding claims, wherein the rim (18) is a stepped rim.

8. Fastener (10) according to any of the preceding claims, wherein a portion of the stem is overmolded by the support element.

9. Fastening arrangement comprising a fastener (10) according to any of the precedent claims, a frame and a panel, wherein the panel comprises a hole and the engaging members (24, 26) engage in the hole, such that the periphery the hole is in contact with the support element only.

## Patentansprüche

1. Befestigungselement (10) zum Anfügen einer Platte an einem Rahmen, umfassend:
a) ein Körperelement (12), das aus einem ersten Kunststoffmaterial hergestellt ist, und
b) ein Trägerelement (14), das aus einem zweiten Kunststoffmaterial hergestellt ist,
wobei das zweite Kunststoffmaterial weniger starr ist als das erste Kunststoffmaterial,
wobei das Trägerelement zumindest teilweise auf das Körperelement aufgeformt ist, wobei das Körperelement umfasst
- einen Flansch (16), der eine Innen- und eine Außenoberfläche gegenüber der Innenoberfläche aufweist, wobei der Flansch (16) flach ist und einen Rand (18) aufweist,
- einen Schaft (20), der sich von der Innenoberfläche bis zu einem freien Endabschnitt (22) erstreckt, wobei der freie Endabschnitt des Schafts eine konische Form aufweist,
- einen Griffabschnitt (27), der an der Außenoberfläche des Flansches angeordnet ist
- Eingriffselemente (24, 26), die sich aus dem Schaft erstrecken und sich schräg nach oben in Richtung der Innenoberfläche des Flansches ausdehnen, wobei die Eingriffselemente (24, 26) eine dem Schaft zugewandte Innenoberfläche und eine Außenoberfläche gegenüber der Innenoberfläche aufweisen,
wobei das Trägerelement (14) auf den Rand aufgeformt ist und sich nach außen erstreckt und einen Federkragen bildet, der sich an dem Umfang des Flansches erstreckt und mit dem Flansch einen von Null verschiedenen Winkel bildet, und wobei das Trägerelement weiter auf die Eingriffselemente aufgeformt ist,
wobei jedes Eingriffselement (24, 26) ein freies Ende umfasst, das in Richtung der Innenoberfläche des Flansches (16) gerichtet ist, **dadurch gekennzeichnet, dass** an dem freien Ende ein Vorsprung (30) angeordnet ist, sodass der Vorsprung (30) einen Anschlag für das Trägerelement an dem Eingriffselement (24, 26) bildet, und wobei sich das Trägerelement (14) an den Eingriffselementen (24, 26) an deren Außenoberfläche und aus dem Vorsprung in Richtung des freien Endes des Schafts erstreckt, ohne sich auf dem freien Ende des Schafts zu erstrecken.

2. Befestigungselement (10) nach Anspruch 1, wobei der freie Endabschnitt (22) des Schafts (20) ein erstes Segment (S1), das eine erste konische Form aufweist, und ein zweites Segment (S2) umfasst, das eine zweite konische Form aufweist, wobei sich das zweite Segment (S2) zwischen dem ersten Segment (S1) und dem Flansch erstreckt, und wobei das Trägerelement auf das zweite Segment (S2) aufgeformt ist, wobei eine Basis der konischen Form des ersten Segments (S1) einen Anschlag für das auf das zweite Segment aufgeformte Trägerelement bildet.

3. Befestigungselement (10) nach einem der vorstehenden Ansprüche, wobei das auf das Eingriffselement (24, 26) aufgeformte Trägerelement weiter Klappen (F) umfasst, die sich im Wesentlichen parallel zu dem Flansch (16) erstrecken.

4. Befestigungselement (10) nach einem der vorstehenden Ansprüche, wobei zwei Eingriffselemente (24, 26) bereitgestellt sind und wobei der Schaft einen rechteckigen Querschnitt aufweist.

5. Befestigungselement (10) nach einem der vorstehenden Ansprüche, wobei der Griffabschnitt (27) ein erstes Segment, das sich von der Außenoberfläche des Flansches mit einem eingeschränkten Querschnitt erstreckt, und ein zweites, sich aus dem ersten Segment erstreckendes Segment umfasst, das einen bogenförmigen Körper aufweist.

6. Befestigungselement (10) nach einem der Ansprüche 1 bis 5, wobei der Griffabschnitt (27) ein erstes Segment, das sich von der Außenoberfläche des Flansches mit einem eingeschränkten Querschnitt erstreckt, und ein zweites Segment umfasst, das sich von dem ersten Segment parallel zu dem Flansch (16) erstreckt.

7. Befestigungselement (10) nach einem der vorstehenden Ansprüche, wobei der Rand (18) ein abgestufter Rand ist.

8. Befestigungselement (10) nach einem der vorstehenden Ansprüche, wobei ein Abschnitt des Schafts von dem Trägerelement aufgeformt ist.

9. Befestigungsanordnung, umfassend ein Befestigungselement (10) nach einem der vorstehenden Ansprüche, einen Rahmen und eine Platte, wobei die Platte ein Loch umfasst und die Eingriffselemente (24, 26) in das Loch eingreifen, sodass der Umfang des Lochs nur mit dem Trägerelement in Kontakt ist.

## Revendications

1. Dispositif de fixation (10) pour fixer un panneau sur un cadre comprenant :
a) un élément de corps (12) réalisé dans une première matière plastique et
b) un élément de support (14) réalisé dans une seconde matière plastique,
la seconde matière plastique étant moins rigide que la première matière plastique,
l'élément de support étant, au moins en partie, surmoulé sur l'élément de corps, dans lequel l'élément de corps comprend
- une bride (16) présentant une surface interne et une surface externe opposée à la surface interne, la bride (16) étant plate et présentant un rebord (18),
- une tige (20) s'étendant depuis la surface interne jusqu'à une partie d'extrémité libre (22), dans lequel la partie d'extrémité libre de la tige présente une forme conique,
- une partie de préhension (27) agencée sur la surface externe de la bride
- des éléments de mise en prise (24, 26) s'étendant depuis la tige et s'étendant obliquement vers le haut en direction de la surface interne de la bride, les éléments de mise en prise (24, 26) présentant une surface interne faisant face à la tige et une surface externe opposée à la surface interne,
dans lequel l'élément de support (14) est surmoulé sur le rebord et s'étend extérieurement, formant une cuvette de ressort s'étendant au niveau du périmètre de la bride et formant un angle non nul avec la bride et dans lequel l'élément de support est en outre surmoulé sur les éléments de mise en prise,
dans lequel chaque élément de mise en prise (24, 26) comprend une extrémité libre dirigée vers la surface interne de la bride (16), **caractérisé en ce qu'**une saillie (30) est agencée sur l'extrémité libre de telle sorte que la saillie (30) forme une butée pour l'élément de support sur l'élément de mise en prise (24, 26) et dans lequel l'élément de support (14) s'étend sur les éléments de mise en prise (24, 26) sur leur surface externe et depuis la saillie vers l'extrémité libre de la tige, sans s'étendre sur l'extrémité libre de la tige.

2. Dispositif de fixation (10) selon la revendication 1, dans lequel la partie d'extrémité libre (22) de la tige (20) comprend un premier segment (S1) présentant une première forme conique et un second segment (S2) présentant une seconde forme conique, dans lequel le second segment (S2) s'étend entre le premier segment (S1) et la bride et dans lequel l'élément de support est surmoulé sur le second segment (S2), une base de la forme conique du premier segment (S1) formant une butée pour l'élément de support surmoulé sur le second segment.

3. Dispositif de fixation (10) selon l'une quelconque des revendications précédentes, dans lequel l'élément de support surmoulé sur l'élément de mise en prise (24, 26) comprend en outre des rabats (F) s'étendant sensiblement parallèlement à la bride (16).

4. Dispositif de fixation (10) selon l'une quelconque des revendications précédentes, dans lequel deux éléments de mise en prise (24, 26) sont prévus et dans lequel la tige présente une coupe transversale rectangulaire.

5. Dispositif de fixation (10) selon l'une quelconque des revendications précédentes, dans lequel la partie de préhension (27) comprend un premier segment s'étendant depuis la surface externe de la bride avec une coupe transversale restreinte, et un second segment s'étendant depuis le premier segment présentant un corps arqué.

6. Dispositif de fixation (10) selon l'une quelconque des revendications 1 à 5, dans lequel la partie de préhension (27) comprend un premier segment s'étendant depuis la surface externe de la bride avec une coupe transversale restreinte, et un second segment s'étendant depuis le premier segment parallèlement à la bride (16).

7. Dispositif de fixation (10) selon l'une quelconque des revendications précédentes, dans lequel le rebord (18) est un rebord étagé.

8. Dispositif de fixation (10) selon l'une quelconque des revendications précédentes, dans lequel une partie de la tige est surmoulée par l'élément de support.

9. Agencement de dispositif de fixation comprenant un dispositif de fixation (10) selon l'une quelconque des revendications précédentes, un cadre et un panneau, dans lequel le panneau comprend un trou et les éléments de mise en prise (24, 26) s'engagent dans le trou de telle sorte que la périphérie du trou soit en contact uniquement avec l'élément de support.
